# EUROPÄISCHE PATENTANMELDUNG

(11) **EP 3 210 460 A1**
(43) Veröffentlichungstag der Anmeldung: **30.08.2017**
(21) Anmeldenummer: 17156993.2
(22) Anmeldetag: 20.02.2017
(51) Int. Cl.: A01D 89/00, A01D 84/00

(54) **HALMGUTFÖRDERVORRICHTUNG**

(30) Priorität: 25.02.2016 DE 102016103362
(71) Anmelder: Brielmaier, Martin, 88048 Friedrichshafen (DE)
(72) Erfinder: Brielmaier, Martin, 88048 Friedrichshafen (DE)
(74) Vertreter: Patentanwälte und Rechtsanwalt Weiß, Arat & Partner mbB

(57) **Zusammenfassung**

Eine Halmgutfördervorrichtung (1) mit einem Halmgutleitelement (2), einem Maschinenrahmen (3) und einer Welle (4), wobei die Welle (4) in dem Maschinenrahmen (3) rotierbar gelagert ist, wobei der Welle (3) mitrotierende Förderelemente (5) zugeordnet sind, wobei der Maschinenrahmen (3) Lamellenöffnungen (6) aufweist, sodass die Förderelemente (5) zumindest teilweise aus dem Maschinenrahmen (3) austreten können, sodass mit den Förderelementen (3) ein Halmgut von einer Bodenfläche (B) aufnehmbar und in Richtung des Halmgutleitelements (2) bewegbar ist, wobei das Halmgutleitelement (2) das Halmgut in eine Ableitrichtung (7) ableitet, die im Wesentlichen parallel zu einer Längsachse (8) der Welle (3) ist, wobei die Förderelemente Enden (9) aufweisen, die zumindest teilweise durch die Rotation der Welle (3) eine Kreisbahn (10) beschreiben, wobei ein Punkt der Kreisbahn welcher auf einer Senkrechten (S) zwischen der Welle (3) und der Bodenfläche (B) angeordnet ist einen Winkel von 0° auf der Kreisbahn (10)beschreibt, soll dadurch gekennzeichnet sein, dass die Lamellenöffnungen (6) des Maschinenrahmens (3) so ausgebildet sind, dass die Enden (9) der Förderelemente (5) in einem Bereich in einem Winkel von 80° bis 135° auf der Kreisbahn (10) in den Maschinenrahmen (3) eintreten, wobei das Halmgutleitelement (2) so an dem Maschinenrahmen (3) angeordnet ist, dass ein unterer Abschnitt (13) des Halmgutleitelements (2) zum Maschinenrahmen (3) eine im Wesentlichen vertikale Ausrichtung aufweist, sodass das aufgenommene Halmgut nach der Aufnahme durch die Förderelemente (5) durch das Halmgutleitblech (2) in der Ableitrichtung (7) zu einer Seite befördert wird.

## Beschreibung

### Technisches Gebiet

Die Erfindung betrifft eine Halmgutfördervorrichtung nach dem Oberbegriff des Anspruchs 1 und eine Verwendung der Halmgutfördervorrichtung nach dem Oberbegriff des Anspruchs 12.

### Stand der Technik

In der Landwirtschaft kommen verschiedene Maschinen oder Geräte zum Zusammenrechen bzw. Schwaden von Halmgut, das auf einer gemähten landwirtschaftlichen Bodenfläche liegt. Meist werden hierfür Maschinen wie bspw. Kreiselschwader genutzt, die an einem Traktor an der Front- oder Heckseite an zugehörigen Aufnahmepunkten befestigt werden.

In Hanglagen, bspw. in Gebirgen und/oder Mittelgebirgen, sind Traktoren oder ähnliche Maschinen auf Grund der Umsturzgefahr häufig nicht dazu geeignet, das Halmgut zu mähen und anschliessend zu einem Schwad zusammenzuführen, sodass das Halmgut von einer Ballenpresse oder einem Ladefahrzeug aufgenommen werden kann.

Für das Mähen der landwirtschaftlichen Bodenfläche werden hierfür in Hanglagen häufig Einachsgeräteträger zum Einsatz, die lediglich eine Fahrachse aufweisen und an deren Frontseite ein sich auf der Bodenfläche abstützender Mähbalken angeordnet ist. Um das Halmgut anschliessend einzubringen muss dieses insbesondere in steilen Hanglagen bspw. mit Handrechen zusammengerecht werden. Alternativ können unter anderem an den Einachgeräteträger koppelbare Bandrechen, wie bspw. in der EP 2 191 711 A1 offenbart, oder an den Einachsgeräteträger anbringbare Heuschieber, wie bspw. der "Brielmaier Heuschieber" genutzt werden.

Weiterhin ist aus der EP 2 449 874 B1 eine Fördereinrichtung zur Anbringung an einer einachsigen landwirtschaftlichen Arbeitsmaschine bekannt, bei der eine Aufnahmevorrichtung mit Förderzinken das Halmgut vom Boden anhebt und entgegen der Fahrtrichtung der Arbeitsmaschine einem horizontalen Förderabschnitt zuführt, der vor einem Anstellorgan angeordnet ist. Nachteilig daran ist, dass das Halmgut sich immer wieder in der Aufnahmevorrichtung verfängt und somit die Halmgutförderung beeinträchtigt, weshalb bspw. im horizontalen Förderabschnitt weitere Förderungseinrichtungen, wie umlaufende Endlosförderbänder, angebracht werden. Dies führt wiederum zu einer höheren Komplexität an Bauteilen und einem höheren Gewicht der Fördereinrichtung.

### Aufgabe der Erfindung

Aufgabe der Erfindung ist es eine Halmgutfördervorrichtung zur Verfügung zu stellen die Nachteile des Standes der Technik zumindest teilwiese zu beheben. Insbesondere ist es Aufgabe der Erfindung eine Halmgutfördervorrichtung zur Verfügung zu stellen, mit der ein besserer Förderfluss des Halmguts erreichbar ist. Zudem soll es Aufgabe der Erfindung sein eine Halmgutfördervorrichtung zur Verfügung zu stellen die eine geringere Komplexität aufweist und vorzugsweise mit verschiedenen landwirtschaftlichen Arbeitsmaschinen koppel- und verwendbar ist.

### Lösung der Aufgabe

Zur Lösung der Aufgabe führen die Merkmale nach den Ansprüchen 1 und 12. Vorteilhafte Ausgestaltungen sind in den Unteransprüchen beschrieben.

Eine erfindungsgemässe Halmgutfördervorrichtung umfasst einen Maschinenrahmen sowie ein Halmgutleitelement, das vorzugsweise an dem Maschinenrahmen befestigt ist oder einstückig mit diesem ausgebildet ist. Weiterhin umfasst die erfindungsgemässe Halmgutfördervorrichtung eine Welle, die in dem Maschinenrahmen rottierbar gelagert ist. Der Welle sind dabei mitrotierende Förderelementen zugeordnet. Die Welle weist dabei in einem typischen Ausführungsbeispiel mehrere nebeneinander und um den Umfang an und/oder auf der Welle angeordnete Förderelemente auf.

Bei den Förderelementen handelt es sich in einem Ausführungsbeispiel um Zinken, die direkt an Aufnahmen an der Welle befestigt werden können, und/oder Zinkenräder die auf der Welle befestigt werden können. Die Zinkenräder weisen dabei vorzugsweise gleichmässig und den Umfang verteilte Aufnahmen für Zinken auf. In einem typischen Ausführungsbeispiel kommen bei einer erfindungsgemässen Halmgutfördervorrichtung ungesteuerte Zinken zum Einsatz. Aber auch der Einsatz von gesteuerten Zinken auf/an der Welle und/oder den Zinkenrädern ist durch die vorliegende Erfindung umfasst. Die Funktion gesteuerter und un gesteuerter Zinken ist aus dem Stand der Technik bekannt.

Der Maschinenrahmen der erfindungsgemässen Halmgutfördervorrichtung umfasst weiterhin Lamellenöffnungen, die zumindest ein teilweises Austreten der Förderelemente während der Rotation der Welle aus dem Maschinenrahmen ermöglichen. Die aus dem Maschinenrahmen austretenden Förderelemente können dadurch ein Halmgut von einer Bodenfläche aufnehmen und in Richtung des Halmgutleitelements bewegen. Anschliessend kann das Halmgut über das Halmgutleitelement in einer Ableitrichtung, die im Wesentlichen parallel zu einer Längsachse der Welle ist, abgeleitet bzw. gefördert werden. Bei dem Halmgut kann es sich bspw. um Heu, Gras, Silage, Stroh oder ähnliches Schnittgut handeln.

Die auf/an der Welle angeordneten Förderelemente weisen von der Welle weg gerichtete Enden auf, die während der Rotation der Welle zumindest teilweise durch die Rotation der Welle eine Kreisbahn beschreiben. Sofern die ungesteuerte Zinken als Förderelemente genutzt werden, beschreiben deren Enden bei einer Rotation der Welle um 380° eine vollständige Kreisbahn. Ein Winkel von 0 ° auf der Kreisbahn wird dabei durch den Punkt definiert, welcher auf einer Senkrechten zwischen einem Mittelpunkt der Welle und der Bodenfläche von der die Halmgutfördervorrichtung das Halmgut aufnimmt, angeordnet ist.

Die Lamellenöffnungen des Maschinenrahmens sind bei der erfindungsgemässen Halmgutfördervorrichtung so ausgebildet, dass die von der Welle abgewandten Enden der Förderelemente in einem Bereich in einem Winkel von 80 ° bis 135 ° auf der Kreisbahn in den Maschinenrahmen eintreten. Der Winkel auf der Kreisbahn steigt dabei von dem oben beschriebenen Punkt von 0 ° in Richtung der Rotationsrichtung der Welle bzw. der Förderelemente an.

Das Halmgutleitelement ist an den Maschinenrahmen so angeordnet, dass es zum Maschinenrahmen eine im wesentliche vertikale Ausrichtung ausweist, sodass das aufgenommene Halmgut nach der Aufnahme durch die Förderelemente durch das Halmgutleitelement in der Ableitrichtung zu einer Seite befördert werden kann. Dabei wird das Halmgut in einem ordnungsgemässen Gebrauch der Halmgutfördervorrichtung vorzugsweise durch das Halmgutleitelement in der Ableitrichtung beispielsweise an einem Steilhang den Hang hinab und somit zu einer Seite der Halmgutfördervorrichtung befördert.

Die Lamellenöffnungen im Maschinenrahmen erstrecken sich vorzugsweise nur so weit, dass die rotierenden Förderelemente ohne an den Maschinenrahmen zu stossen, wieder in den Maschinenrahmen eintreten können, nachdem sie das Halmgut von der Bodenfläche aufgenommen haben. Durch den Eintritt der Enden der Förderelemente in den Maschinenrahmen in einem Bereich von 80 ° bis 135 ° auf der Kreisbahn, kann erreicht werden, dass das Halmgut durch die Förderelemente der Halmgutfördervorrichtung nicht wie im Stand der Technik zunächst nach hinten zu einem Ableitelement befördert wird, sondern im Wesentlichen nur von der Bodenfläche aufgenommen und nach oben zu dem Halmgutleitelement bzw. einem Frontelement des Maschinenrahmens befördert wird. Das Frontelement des Maschinenrahmens schliesst vorzugsweise bündig an das Halmgutleitelement an.

Dadurch kann erreicht werden, dass das aufgenommene Halmgut möglichst früh auf ein glattes Halmgutleitelement trifft, wodurch die Gefahr verhindert oder zumindest stark verringert werden kann, dass sich das Halmgut in den Lamellenöffnungen verfängt und einen sauberen Abschluss des Halmguts verhindert. Um ein möglichst effektives Ableiten des Halmguts über das Frontelement des Maschinenrahmens und/oder das Halmgutleitelement zu ermöglichen treten die Enden der Förderelemente in einem Winkelbereich von 80° bis 135° in den Maschinenrahmen im Bereich des Frontelements des Maschinenrahmens ein. In bevorzugten Ausführungsbeispielen befindet sich der Eintritt der Enden der Förderelemente in den Maschinenrahmen in einem Winkelbereich von 85° bis 110°, insbesondere bei 90° bis 95°.

Das Frontelement des Maschinenrahmens erstreckt sich in einem typischen Ausführungsbeispiel tangential von der Eintrittsstelle der Enden der Förderelemente in den Maschinenrahmen nach oben. Somit ist das Frontelement des Maschinenrahmens bei einem Eintritt der Enden der Förderelemente in den Maschinenrahmen auf der Kreisbahn bei einem Winkel von 90° vertikal zu der Bodenfläche ausgerichtet. Das Halmgutleitelement schliesst in einem typischen Ausführungsbeispiel an einem oberen Ende des Frontelement des Maschinenrahmens an den Maschinenrahmen an und/oder ist dort befestigt, sodass ein bündiger Übergang von dem Maschinenrahmen auf das Halmgutleitelement erreicht werden kann, wodurch der Abfluss des Halmguts in der Ableitrichtung, die im Wesentlichen parallel zu der Längsachse der Welle ist, gewährleistet werden kann.

Ein unterer Abschnitt des Halmgutleitelements ist dabei im Wesentlichen vertikal zu der Bodenfläche ausgerichtet, wobei hierdurch ein Winkel zwischen der Bodenfläche und dem unteren Abschnitt des Halmgutleitelements von 75° bis 110°, in einem bevorzugten Ausführungsbeispiel 85° bis 90°, und hierbei insbesondere 90°, beschrieben werden soll. Der Winkel zwischen der Bodenfläche und dem Halmgutleitelement entspricht dabei einem Winkel der zwischen einer Rückseite des Halmgutleitelements und der Bodenfläche aufgespannt wird, wobei die Rückseite des Halmgutleitelements bei einer ordnungsgemässen Nutzung der Halmgutfördervorrichtung der Seite/Fläche des Halmgutleitelements entspricht, die im Regelfall nicht mit dem zu bewegenden/fördernden Halmgut in Berührung kommt.

In einem Ausführungsbeispiel umfasst die Halmgutfördervorrichtung weiterhin zumindest einen Rotationsschwader. Der Rotationsschwader weist eine im Wesentlichen vertikale Rotationsachse auf, und umfasst um diese Rotationsachse rotierende Förderelemente. In einem bevorzugten Ausführungsbeispiel sind an dem Maschinenrahmen der Halmgutfördervorrichtung beidends der Welle Rotationsschwader angeordnet.

Durch die Rotationsschwader, deren Rotationsrichtung einstellbar und wechselbar ist, wobei bei beidends an dem Maschinenrahmen angebrachten Rotationsschwadern die Rotationsrichtung gleichsinnig oder gegensinnig einstellbar ist, ermöglichen insbesondere ein besseres Ableiten und somit ein besseren Abfluss des durch die Halmgutfördervorrichtung vom Boden aufgenommenen Halmguts an den Seiten der Halmgutfördervorrichtung. Dadurch kann der Abfluss des Halmguts nochmals verbessert werden. In weiteren Ausführungsbeispielen kann nur einends der Welle an dem Maschinenrahmen ein Rotationsschwader angeordnet sein.

Weiterhin umfasst die Halmgutfördervorrichtung in einem Ausführungsbeispiel ein Verschwenkelement, sodass die Halmgutfördervorrichtung zu einer Fahrtrichtung eines landwirtschaftlichen Arbeitsgerätes, an das die Halmgutfördervorrichtung koppelbar ist, verschwenkt werden kann. Vorzugsweise ist die Halmgutfördervorrichtung dabei um einen Winkel in einem Bereich von -30° bis +30° um die Fahrtrichtung des landwirtschaftlichen Arbeitsgerätes verschwenkbar.

Weiterhin weist das Halmgutleitelement in einem oberen Bereich, der sich an den unteren Bereich des Halmgutleitelements, der im Wesentlichen vertikal zu der Bodenfläche ist, anschliesst, eine konkave Krümmung auf. Durch die konkave Krümmung wird dabei beschrieben, dass das Halmgutleitelement in dem oberen Bereich bei einer ordnungsgemässen Nutzung der Halmgutfördervorrichtung in Fahrtrichtung nach vorne gekrümmt ist. Insbesondere in Verbindung mit der Schwenkbarkeit über das Verschwenkelement kann somit bei der Heuableitung ein ähnliches System, wie es von einem Schneepflug bekannt ist, erreicht werden. Durch die Schrägstellung/das Verschwenken der Halmgutfördervorrichtung um die Fahrtrichtung wird dem Halmgut nach der Aufnahme dadurch ein zusätzlicher Impuls in Richtung der Ableitrichtung gegeben, wodurch der Abfluss/die Förderung des Halmguts zur Seite verbessert werden kann.

In einem weiteren Ausführungsbeispiel ist zumindest einends das Halmgutleitelement ein schwenkbares Halmgutableitelement angeordnet. Das Halmgutableitelement weist vorzugsweise eine in Fahrtrichtung konvexe Krümmung auf, sodass der Abfluss des Halmgutes von dem Halmgutleitelement über das Halmgutableitelement über das Halmgutableitelement an einer Seite der Halmgutfördervorrichtung verbessert werden kann.

Das Halmgutableitelement ist vorzugsweise schwenkbar ausgeführt, sodass dieses auch nach vorne geschenkt werden kann, sodass an den Aussenseiten des Halmgutleitelements Begrenzungen entstehen, wodurch das Halmgut durch die Halmgutfördervorrichtung in einer Fahrtrichtung des landwirtschaftlichen Arbeitsgeräts bewegt werden kann, wobei durch die Fahrtrichtung nach vorne ausgerichteten Halmgutableitelemente in diesem Fall ein seitlicher Abfluss des durch die Halmgutfördervorrichtung aufgenommenen Halmguts verhindert werden kann. Dies ermöglicht bspw. Halmgut aus Ecken oder engen Bereichen heraus zu fördern, indem dadurch das Halmgut vor der Halmgutfördervorrichtung in Fahrtrichtung nach vorne bewegt wird.

Weiterhin kann das Halmgutableitelement auf der Seite zu der das aufgenommene Halmgut bewegt/gefördert werden soll, in einer Grundstellung ausgerichtet sein, sodass der Abfluss des Halmguts gefördert wird und auf der gegenüberliegenden Seite nach vorne geschwenkt sein, sodass verhindert werden kann, dass Halmgut auf der gegenüberliegenden Seite gefördert bzw. bewegt wird.

Zudem kann in einem weiteren Ausführungsbeispiel die Welle der Halmgutfördervorrichtung zumindest zwei Wellenelemente umfassen, die zueinander verschwenkbar sind. Durch die mehrteilige Ausführung der Welle und ihre daraus resultierende Gelenkigkeit können Unebenheiten der Bodenfläche ausgeglichen werde. Dadurch kann beispielsweise Halmgut in Senken oder bei leichten Erhöhungen, die über eine Breite der Halmgutfördervorrichtung anzutreffen sind, durch die Halmgutfördervorrichtung besser vom Boden aufgenommen werden.

Hierfür sind die einzelnen Wellenelemente beispielsweise über Gleichlaufgelenke miteinander verbunden. Bei dem Einsatz einer mehrteiligen Welle ist die Welle im Bereich der Gelenke mit Höhengleitkufen und/oder Höhentasträdern verbunden, die es ermöglichen, dass sich die Welle an Unebenheiten der Bodenfläche anpasst. Die Bewegung der Welle kann beispielsweise über Langlöcher im Maschinenrahmen und/oder Wellenhalteelemente die mit dem Maschinenrahmen verbunden sind, begrenzt werden. In der DE 10 2015 114 516.2 ist eine solche gelenkige Welle mit Förderelementen beschrieben, die vorzugsweise in einer erfindungsgemässen Halmgutfördervorrichtung zum Einsatz kommen kann.

In einem typischen Ausführungsbeispiel findet die Verwendung der erfindungsgemässen Halmgutfördervorrichtung gekoppelt mit einer landwirtschaftlichen Arbeitsmaschine statt. Bei der landwirtschaftlichen Arbeitsmaschine handelt es sich vorzugsweise um einen Einachsgeräteträger, der eine einzelne angetriebene Achse mit Radeinheiten umfasst. Die Halmgutfördervorrichtung ist vorzugsweise über ein Koppelelement an einer Frontseite des Einachsgeräteträgers anbringbar. In einem Ausführungsbeispiel ist das Koppelelement einteilig bzw. einstückig mit dem Verschwenkelement ausgebildet.

Bei der landwirtschaftlichen Arbeitsmaschine kann es sich neben dem Einachsgeräteträger um Traktoren, Kleintraktoren, Quads oder ähnliche in der Landwirtschaft genutzte Fahrzeuge handeln. Der Antrieb der Welle sowie der gegebenenfalls. vorhandenen Rotationsschwader kann über einen Hydraulikantrieb erfolgen und/oder über einen Zapfwellenantrieb. Sowohl der Hydraulikantrieb als auch der Zapfwellenantrieb werden in typischen Ausführungsbeispielen durch die Antriebseinheit der landwirtschaftlichen Arbeitsmaschine angetrieben. Das Verschwenkelement der Halmgutfördervorrichtung kann antreibbar und/oder manuell verstellbar/verschwenkbar ausgebildet sein, wobei der Antrieb bei dem angetriebenen Verschwenkelement vorzugsweise ebenfalls über einen Hydraulik- oder Zapfwellenantrieb erfolgt, der durch die Antriebseinheit der landwirtschaftlichen Arbeitsmaschine angetrieben wird.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Figur 1: eine perspektivische Ansicht eines Ausführungsbeispiels einer erfindungsgemässen Halmgutfördervorrichtung;
- Figur 2: eine schematische Vorderansicht der Halmgutfördervorrichtung nach Figur 1;
- Figur 3: eine Schnittdarstellung entlang der Linie III-III durch die Halmgutfördervorrichtung nach Figur 2;
- Figur 4: eine Vorderansicht der Halmgutfördervorrichtung nach Figur 1 auf einer unebenen Bodenfläche;
- Figur 5: eine perspektivische Ansicht auf die Verwendung der Halmgutfördervorrichtung nach Figur 1 an einem Einachsgeräteträger;
- Figur 6: eine Seitenansicht auf die Einachsgeräteträger-Halmgutfördervorrichtung-Kombination nach Figur 5; und
- Figur 7: eine Draufsicht auf eine Einachsgeräteträger-Halmgutfördervorrichtung-Kombination mit einer Halmgutfördervorrichtung mit Halmgutableitelementen.

### Ausführungsbeispiel

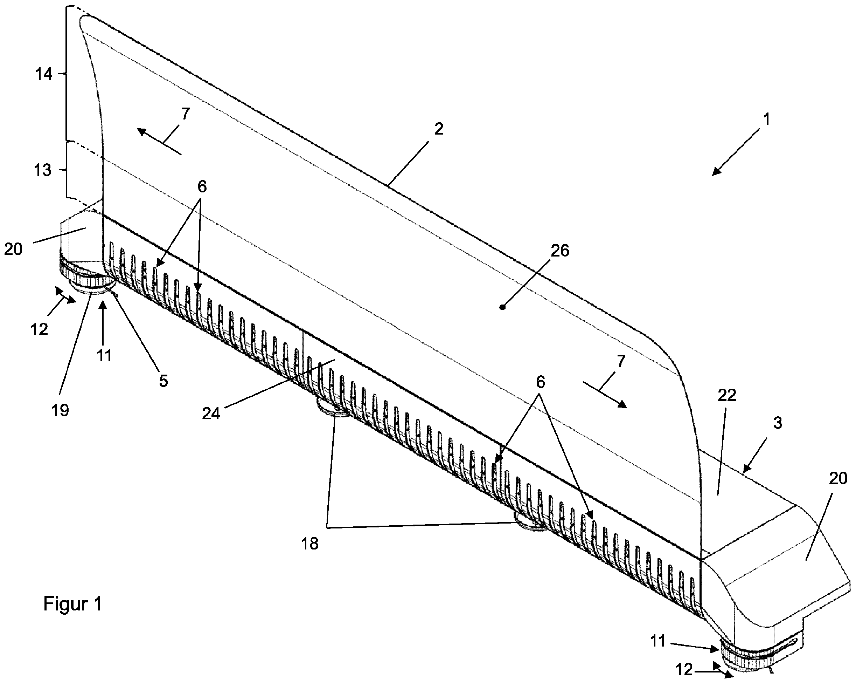

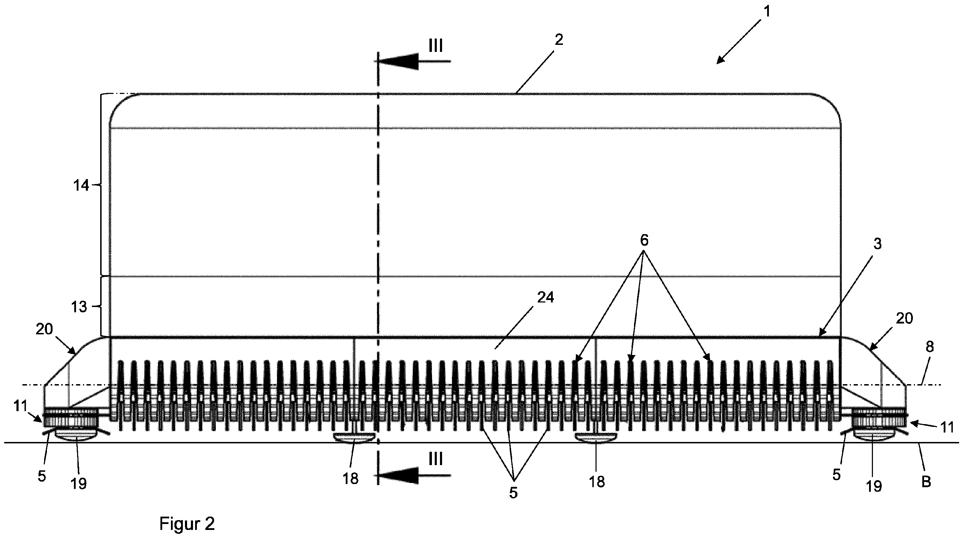

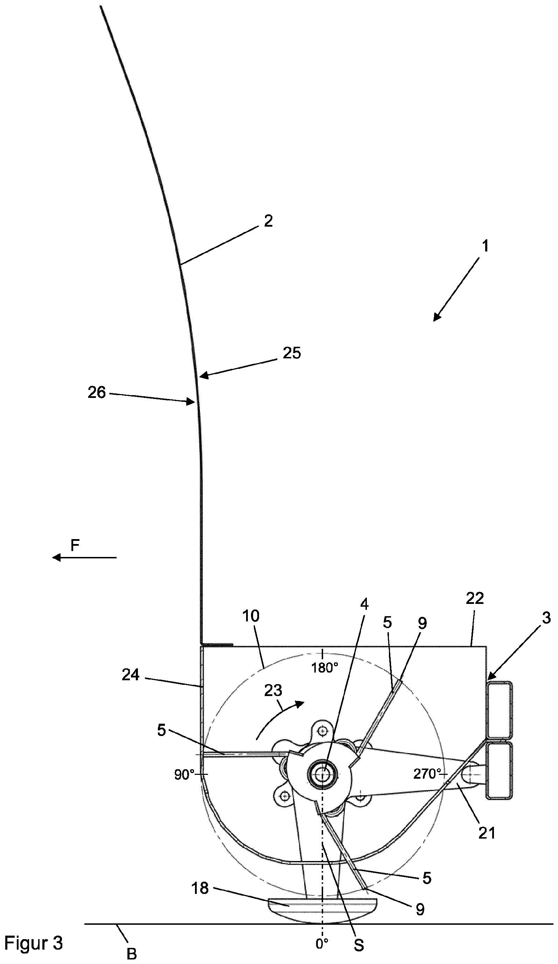

In den Figuren 1 und 2 ist ein erfindungsgemässes Ausführungsbeispiel einer Halmgutfördervorrichtung 1 dargestellt. Die Halmgutfördervorrichtung 1 umfasst ein Halmgutleitelement 2 sowie einen Maschinenrahmen 3 und eine Welle 4 (Figur 3). Die Welle 4 ist in den Maschinenrahmen 3 der erfindungsgemässen Halmgutfördervorrichtung 1 rottierbar gelagert. Wie in den Figuren 2 und 3 gezeigt, sind der Welle 3 mitrotierende Förderelemente 5 zugeordnet.

Weiterhin weist der Maschinenrahmen 3 der erfindungsgemässen Halmgutfördervorrichtung 1 Lamellenöffnungen 6 auf, die es ermöglichen, dass die Förderelemente 5 während der Rotation mit der Welle zumindest teilweise aus dem Maschinenrahmen 3 austreten können. Dadurch kann mit dem Förderelementen 5 ein Halmgut von einer Bodenfläche B aufgenommen und in Richtung einer Vorderseite 26 des Halmgutleitelements 2 bewegt werden. Durch das Halmgutleitelement 2 wird das Halmgut anschliessend in eine Ableitrichtung 7 abgeleitet. Die Ableitrichtung 7, in die das Halmgut durch das Halmgutleitelement 2 abgeleitet/gefördert wird, ist im Wesentlichen parallel zu einer Längsachse 8 der Welle 3. Die Längsachse 8 der Welle 3 entspricht im Regelfall einer Rotationsachse der Welle 3.

Von der Welle 3 abgewandte Enden 9 der Förderelemente 5 beschreiben zumindest teilweise durch die Rotation der Welle 3 eine Kreisbahn 10. In einem typischen Ausführungsbeispiel sind an und oder auf der Welle 3 mehrere nebeneinander und um den Umfang verteilte Förderelemente angeordnet. Vorzugsweise handelt es sich bei den Förderelementen um Zinken aus Metall und/oder Kunststoff, die an Aufnahmen der Welle befestig bar sind und/oder um Zinkenräder, die auf der Welle befestig bar sind. Die Zinkenräder weisen in einem typischen Ausführungsbeispiel um einen Umfang des Zinkenrads angeordnete Zinken aus Metall und/oder Kunststoff auf. In einem erfindungsgemässen Halmgutfördervorrichtung 1 können sowohl ungesteuerte Zinken als auch gesteuerte Zinken zum Einsatz kommen.

In Figur 3 ist eine Welle 4 mit Förderelementen 5 in Form von ungesteuerten Zinken dargestellt. Die Enden 9 der Förderelemente 5 beschreiben durch die Rotation der Welle 4 in eine Rotationsrichtung 23 die in Figur 3 dargestellte Kreisbahn 10. Auf der Kreisbahn 10 beschreibt ein Punkt, welcher auf einer Senkrechten S zwischen dem Mittelpunkt der Welle 3 und der Bodenfläche B angeordnet ist einen Winkel von 0°.

In den Figuren 1 und 2 ist weiterhin dargestellt, dass die Lamellenöffnungen 6 des Maschinenrahmens 3 so ausgebildet sind, dass die Enden 9 der Förderelemente 5 in einem Bereich in einem Winkel von 80° bis 135° auf der Kreisbahn 10 in den Maschinenrahmen eintreten. Mit der Figur 3 ist erkennbart, dass in der dargestellten Halmgutfördervorrichtung 1 die Enden der Förderelemente 5 in einem Bereich von 85° bis 100° auf der Kreisbahn 10 während der Rotation wieder in den Maschinenrahmen 3 eintreten.

Um einen guten und vorzugsweise störungsfreien Halmgutabfluss zu gewährleisten ist das Halmgutleitelement 2 so an den Maschinenrahmen angeordnet, dass es zu Maschinenrahmen einen im Wesentlichen vertikale Ausrichtung aufweist, sodass das aufgenommene Halmgut nach der Aufnahme durch die Förderelemente 5 durch das Halmgutleitelement 2 in der Ableitrichtung 7 zu einer Seite befördert wird. Bei der in den Figuren 1 bis 4 dargestellten Halmgutfördervorrichtung 1 enden die Lamellenöffnungen 6 im Bereich eines Frontelements 24 des Maschinenrahmens 3, der sich tangential an der Kreisbahn 10 im Bereich von einem Winkel von 90° anschliesst. Von dem Frontelement 24 des Maschinenrahmen 3 erfolgt ein bündiger Übergang zu einem unteren Abschnitt 13 des Halmgutleitelements 2, sodass das aufgenommene Halmgut auf der Vorderseite 26 des Halmgutleitelements 2 störungsfrei zur Seite gefördert/abgeleitet werden kann.

Das seitliche Ableiten des Halmguts in einer der Ableitrichtungen 7 kann in einem Ausführungsbeispiel zusätzlich gefördert werden, in dem ein oberer Abschnitt 14 des Halmgutleitelements 2 eine konkave Krümmung aufweist. Durch die konkave Krümmung des oberen Abschnitts 14 wird dabei, wie in Figur 3 dargestellt beschrieben, dass das Halmgutleitelement 2 in dem oberen Bereich 14 in Richtung einer Fahrtrichtung F nach vorne gebogen ist.

Die in den Figuren 1, 2 und 4 dargestellte Halmgutfördervorrichtung 1 umfasst beidends der Welle 4 an den Maschinenrahmen 3 angeordnete Rotationsschwader 11. Die Rotationsschwader 11 sind in dem dargestellten Ausführungsbeispiel jeweils in einer Aufnahme 20 angeordnet. Die Aufnahme 20 ist von der Formgebung dabei so ausgestaltet/ausgebildet, dass ein seitlicher Halmgutabfluss/eine seitliche Halmgutförderung unterstützt wird. Die Rotationsschwader 11 weisen eine im Wesentlichen vertikale Rotationsachse auf, wobei durch den Begriff im Wesentlichen hier ein Winkelbereich zwischen der Rotationsachse der Rotationsschwader 11 und der Bodenflächen B von 70° bis 110°, insbesondere 85° bis 95° beschrieben werden soll. In besonders bevorzugten Ausführungsbeispielen beträgt der Winkel zwischen der Rotationsachse der Rotationsschwader 11 und der Bodenfläche B etwa 90°.

Die Rotationsschwader 11 umfassen Förderelemente 5, bei denen es sich beispielsweise um Zinken handelt, die rotierbar um die Rotationsachse des Rotationsschwader 11 angeordnet sind. Eine Rotationsrichtung 12 der Rotationsschwader 11 ist in typischen Ausführungsbeispielen einstellbar und wechselbar. Dabei kann die Rotationsrichtung 12 der beidends an dem Maschinenrahmen 3 angeordneten Rotationsschwader 11 sowohl gleichsinnig als auch gegensinnig eingestellt werden.

Durch die Rotationsschwader 11 kann der seitliche Abfluss des durch die Halmgutfördervorrichtung aufgenommenen Halmguts unterstützt werden und/oder es kann durch die Förderelemente 5 des Rotationsschwader 11 Halmgut von der Bodenfläche B in Richtung der Förderelemente 5 die auf der Welle 4 angeordnet sind, gefördert/bewegt werden.

Eine Oberseite des Maschinenrahmens 3 kann in einem Ausführungsbeispiel als Wartungsklappe 22 ausgebildet sein um die Förderlemente 5, die Welle oder weitere nicht näher dargestellte Elemente, wie bspw. Lagerungen der Halmgutfördervorrichtung zu warten, instandzuhalten und/oder zu reparieren.

Weiterhin umfasst die Halmgutfördervorrichtung 1 in Ausführungsbeispielen Gleitkufen 19, die in den dargestellten Ausführungsbeispielen im Bereich der Rotationsschwader 11 angeordnet sind, durch die ein ausreichender Abstand des Maschinenrahmens 3 von der Bodenfläche B gewährleistet wird, sodass sowohl eine saubere Aufnahme des Halmguts von der Bodenfläche B gewährleistet werden kann als auch eine Beschädigung bspw. der Förderelemente 5 verhindert werden kann. In weiteren nicht dargestellten Ausführungsbeispielen kann die erfindungsgemässe Halmgutfördervorrichtung Tasträder anstelle oder zusätzlich zu den Gleitkufen 19 aufweisen.

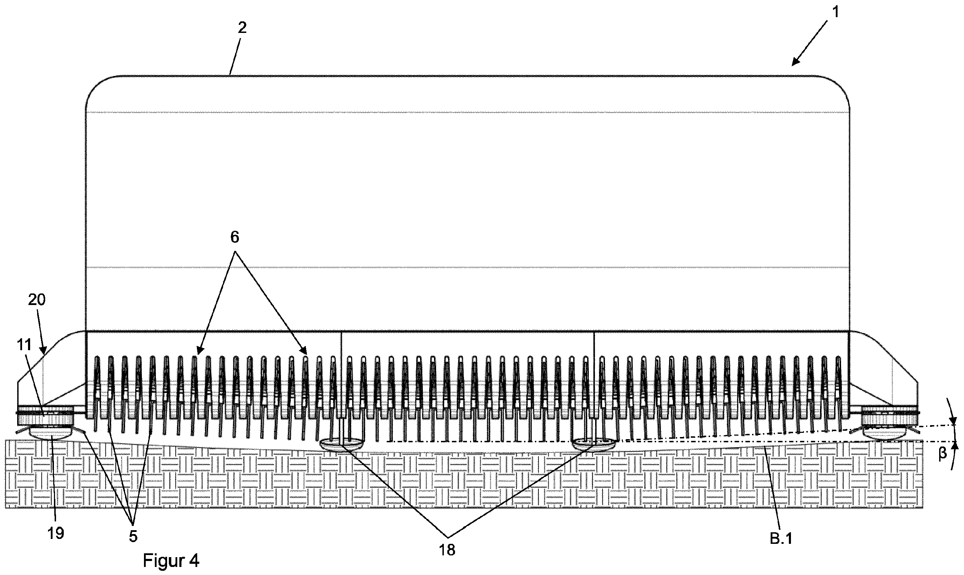

In Figur 4 ist weiterhin dargestellt, dass die Welle 4 der Halmgutfördervorrichtung 1 mehrere Wellenelemente umfassen kann, wobei die Wellenelemente beispielsweise über Gleichlaufgelenke verbunden und zueinander verschwenkbar sind. Dadurch können beispielsweise Bodenunebenheiten wie sie die in Figur 4 dargestellte Bodenfläche B.1 aufweist, ausgeglichen werden. Hierfür umfasst das in Figur 4 dargestellte Ausführungsbeispiel Höhengleitkufen 18, die mit der Welle 4, vorzugsweise im Bereich und/oder an den Gelenkpunkten, in Wirkverbindung stehen.

Die Auslenkung der Welle 4 nach oben/unten kann durch ein Wellenhalteelement 21 und/oder weitere Elemente, wie beispielsweise Führungselemente die in einem Langloch verschiebbar angeordnet sind und mit der Höhengleitkufe 18 in Wirkverbindung stehen, bewerkstelligt werden. In Figur 4 ist dargestellt, dass die Wellenelemente der Welle 4 durch die Unebenheiten der Bodenfläche B1 um einen Wellenschwenkwinkel β zueinander verschwenkt sind.

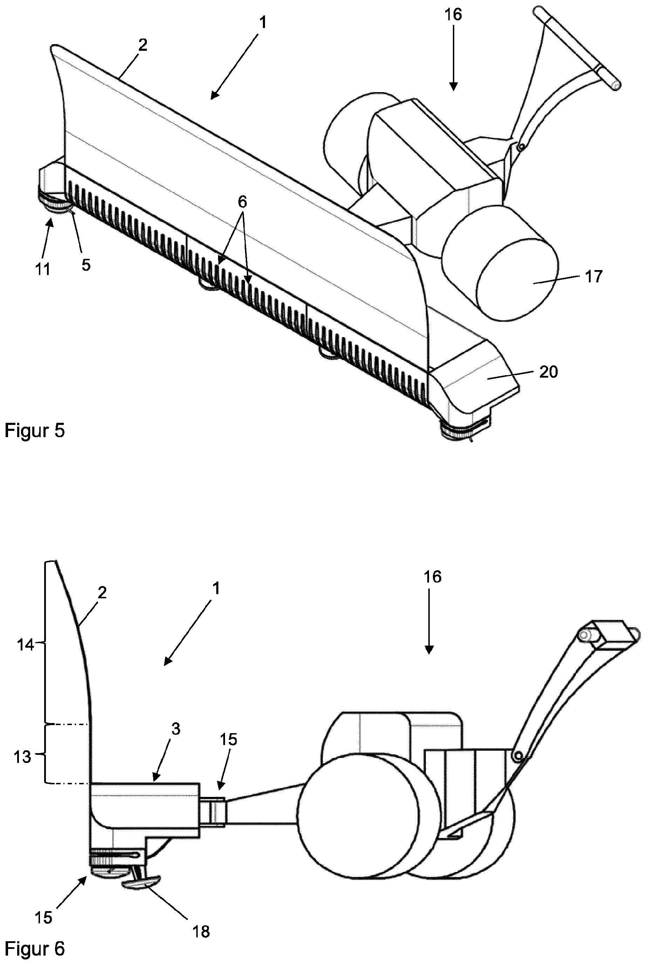

Die Figuren 5 und 6 zeigen das erfindungsgemässe Ausführungsbeispiel der Figuren 1 bis 4 gekoppelt an einen Einachsgeräteträger 16. Bei dem Einachsgeräteträger 16 handelt es sich um eine landwirtschaftliche Arbeitsmaschine, an die die erfindungsgemässe Halmgutfördervorrichtung 1 anbringbar/koppelbar ist. Der in den Figuren 5 und 6 dargestellte Einachsgeräteträger 16 umfasst eine angetriebene Achse, mit Radeinheiten 17, bei denen es sich beispielsweise um luftgefüllte Reifen und/oder Stachelwalzen handeln kann. Solche Einachsgeräteträger kommen insbesondere bei der Bewirtschaftung von landwirtschaftlichen Flächen in Mittel- oder Hochgebirgslagen zum Einsatz, da insbesondere in steilen Hanglagen bei grösseren Maschinen wie Traktoren eine grosse Gefahr eines Umkippen des Fahrzeugs besteht. Die Halmgutfördervorrichtung ist über ein Verschwenkelement 15 mit dem Einachsgeräteträger 16 verbunden.

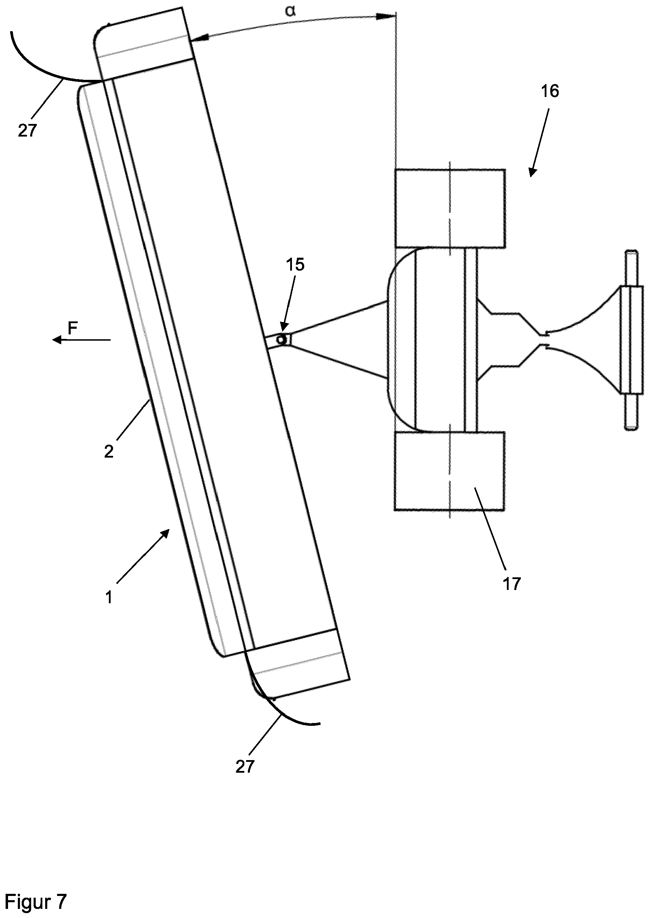

In Figur 7 ist dargestellt, dass die Halmgutfördervorrichtung 1 durch das Verschwenkelement 15 zu der Fahrtrichtung F des Einachsgeräteträgers 16 um einen Winkel α verschwenkbar ist. In typischen Ausführungsbeispielen ist die Halmgutfördervorrichtung um einen Winkel α in einem Bereich von -30° bis +30° bezüglich der Fahrtrichtung F verschwenkbar. In einem bevorzugten Ausführungsbeispiel ist die Halmgutfördervorrichtung zumindest um einen Winkel α von minus -10° bis +10° zu der Fahrtrichtung F des Einachsgeräteträgers 16 oder eines anderen landwirtschaftlichen Arbeitsgeräts verschwenkbar.

Bei der Halmgutfördervorrichtung 1, die in Figur 7 dargestellt ist, handelt es sich um ein weiteres Ausführungsbeispiel einer erfindungsgemässen Halmgutfördervorrichtung 1. Diese umfasst an den seitlichen Enden des Halmgutleitelements 2 verschwenkbare Halmgutableitelemente 27. Dabei ist das in Fahrtrichtung rechte Halmgutableitelement 27 nach vorne geschwenkt. Dadurch kann unterstützt werden, dass das durch die Halmgutfördervorrichtung 1 aufgenommene Halmgut durch das Halmgutleitelement 2 in Richtung der Ableitrichtung 7.1 bewegt/gefördert wird. Das in Fahrtrichtung auf der linken Seite angeordnete Halmgutableitelement 27 ist in dem dargestellten Ausführungsbeispiel nach hinten geschwenkt, um den Halmgutabfluss von dem Halmgutleitelement 2 der Halmgutfördervorrichtung zu erleichtern. Durch das Verschwenken der Halmgutfördervorrichtung 1 um dem Winkel α wird dem aufgenommenen Halmgut bei der Fahrt in der Fahrtrichtung F ein zusätzlicher seitlicher Impuls gegeben, der den Abfluss des Halmguts in der Ableitrichtung 7.1 zusätzlich unterstützt.

**Bezugszeichenliste**

| | | | | | |
|---|---|---|---|---|---|
| 1 | Halmgutfördervorrichtung | 34 | | B | Bodenfläche |
| 2 | Halmgutleitelement | 35 | | S | Senkrechte |
| 3 | Maschinenrahmen | 36 | | F | Fahrtrichtung |
| 4 | Welle | 37 | | α | Winkel |
| 5 | Förderelement | 38 | | β | Wellenschwenkwinkel |
| 6 | Lamellenöffnung | 39 | | | |
| 7 | Ableitrichtung | 40 | | | |
| 8 | Längsachse | 41 | | | |
| 9 | Ende Förderelement | 42 | | | |
| 10 | Kreisbahn | 43 | | | |
| 11 | Rotationsschwader | 44 | | | |
| 12 | Rotationsrichtung | 45 | | | |
| 13 | unterer Abschnitt | 46 | | | |
| 14 | oberer Abschnitt | 47 | | | |
| 15 | Verschwen kelement | 48 | | | |
| 16 | Einachsgeräteträger | 49 | | | |
| 17 | Radeinheit | 50 | | | |
| 18 | Höhengleitkufe | 51 | | | |
| 19 | Gleitkufe | 52 | | | |
| 20 | Aufnahme | 53 | | | |
| 21 | Wellenhalteelement | 54 | | | |
| 22 | Wartungsblech | 55 | | | |
| 23 | Wellenrotationsrichtung | 56 | | | |
| 24 | Frontelement | 57 | | | |
| 25 | Rückseite | 58 | | | |
| 26 | Vorderseite | 59 | | | |
| 27 | Halmgutableitblech | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Halmgutfördervorrichtung (1) mit einem Halmgutleitelement (2), einem Maschinenrahmen (3) und einer Welle (4), wobei die Welle (4) in dem Maschinenrahmen (3) rotierbar gelagert ist, wobei der Welle (3) mitrotierende Förderelemente (5) zugeordnet sind, wobei der Maschinenrahmen (3) Lamellenöffnungen (6) aufweist, sodass die Förderelemente (5) zumindest teilweise aus dem Maschinenrahmen (3) austreten können, sodass mit den Förderelementen (3) ein Halmgut von einer Bodenfläche (B) aufnehmbar und in Richtung des Halmgutleitelements (2) bewegbar ist, wobei das Halmgutleitelement (2) das Halmgut in eine Ableitrichtung (7) ableitet, die im Wesentlichen parallel zu einer Längsachse (8) der Welle (3) ist, wobei die Förderelemente Enden (9) aufweisen, die zumindest teilweise durch die Rotation der Welle (3) eine Kreisbahn (10) beschreiben, wobei ein Punkt der Kreisbahn welcher auf einer Senkrechten (S) zwischen der Welle (4) und der Bodenfläche (B) angeordnet ist einen Winkel von 0° auf der Kreisbahn (10) beschreibt
**dadurch gekennzeichnet,**
**dass** die Lamellenöffnungen (6) des Maschinenrahmens (3) so ausgebildet sind, dass die Enden (9) der Förderelemente (5) in einem Bereich in einem Winkel von 80° bis 135° auf der Kreisbahn (10) in den Maschinenrahmen (3) eintreten, wobei das Halmgutleitelement (2) so an dem Maschinenrahmen (3) angeordnet ist, dass ein unterer Abschnitt (13) des Halmgutleitelements (2) zu der Bodenfläche (B) eine im Wesentlichen vertikale Ausrichtung aufweist, sodass das aufgenommene Halmgut nach der Aufnahme durch die Förderelemente (5) durch das Halmgutleitelement (2) in der Ableitrichtung (7) zu einer Seite befördert wird.

2. Halmgutfördervorrichtung nach Anspruch 1, **dadurch gekennzeichnet, dass** an und/oder auf der Welle (3) mehrere nebeneinander und um den Umfang verteilte Förderelemente (5) angeordnet sind.

3. Halmgutfördervorrichtung nach Anspruch 1 oder 2, **dadurch gekennzeichnet, dass** die Förderelemente (5) Zinken und/oder Zinkenräder mit um einen Umfang des Zinkenrads angeordneten Zinken sind.

4. Halmgutfördervorrichtung nach Anspruch 3, **dadurch gekennzeichnet, dass** die Zinken ungesteuert sind.

5. Halmgutfördervorrichtung nach einem der vorherigen Ansprüche **gekennzeichnet durch** zumindest einen Rotationsschwader (11).

6. Halmgutfördervorrichtung nach Anspruch 5, dass eine Rotationsrichtung (12) des Rotationsschwader (11) einstellbar und wechselbar ist.

7. Halmgutfördervorrichtung nach Anspruch 6, **dadurch gekennzeichnet, dass** beidends der Welle (4) an dem Maschinenrahmen (3) ein Rotationsschwader (11) angeordnet ist und die Rotationsrichtung (12) der beidends angeordneten Rotationsschwader (11) gleichsinnig oder gegensinnig einstellbar ist.

8. Halmgutfördervorrichtung nach einem der vorherigen Ansprüche, **dadurch gekennzeichnet, dass** das Halmgutleitelement (2) in einem oberen Abschnitt (14) eine konkave Krümmung aufweist.

9. Halmgutfördervorrichtung nach einem der vorherigen Ansprüche **gekennzeichnet durch** ein Verschwenkelement (15), sodass die Halmgutfördervorrichtung (2) zu einer Fahrtrichtung (F) eines landwirtschaftlichen Arbeitsgeräts um einen Winkel (α) in einem Bereich von - 30° bis +30° verschwenkbar ist.

10. Halmgutfördervorrichtung nach einem der vorherigen Ansprüche, **dadurch gekennzeichnet, dass** zumindest einends des Halmgutleitelements (2) ein schwenkbares Halmgutableitelement angeordnet ist.

11. Halmgutfördervorrichtung nach einem der vorherigen Ansprüche, **dadurch gekennzeichnet, dass** die Welle (4) zumindest zwei Wellenelemente umfasst, wobei die Wellenelemente zueinander verschwenkbar sind.

12. Verwendung der Halmgutfördervorrichtung nach einem der Ansprüche 1 bis 11 zur Koppelung mit einer landwirtschaftlichen Arbeitsmaschine.

13. Verwendung der Halmgutfördervorrichtung nach Anspruch 12, **dadurch gekennzeichnet, dass** die landwirtschaftliche Arbeitsmaschine ein Einachsgeräteträger (16) ist.
